# EUROPÄISCHE PATENTSCHRIFT

(11) **EP 1 681 581 B1**
(45) Veröffentlichungstag und Bekanntmachung des Hinweises auf die Patenterteilung: **12.10.2011**
(21) Anmeldenummer: 05000732.7
(22) Anmeldetag: 14.01.2005
(51) Int. Cl.: G01S 13/74, G01S 11/02

(54) **Abstandsmesssystem zur Abstandsbereichsbestimmung**
Distance measuring system for determining a distance range
Système de mesure de distance pour déterminer une zone de distances

(43) Veröffentlichungstag der Anmeldung: 19.07.2006
(73) Patentinhaber: SIEMENS AKTIENGESELLSCHAFT, 80333 München (DE)
(72) Erfinder: Gila, Janos, Dr., 2340 Mödling (AT); Konrad, Wolfgang, Dr., 2340 Mödling (AT)

(56) Entgegenhaltungen:
- EP-A- 1 109 031
- DE-A1- 10 104 916
- DE-A1- 10 234 467
- DE-A1- 10 310 158

## Beschreibung

Die Erfindung betrifft ein Abstandsmesssystem zur Abstandsbereichsbestimmung zwischen zwei Systemmodulen unter Einsatz eines Dauerstrich-Radarsystems.

Radarsysteme eignen sich zur berührungslosen Lokalisierung und Abstandsbestimmung von Objekten. Unter einer Vielzahl verschiedener Radarsysteme ermöglicht z.B. ein frequenzmodulierendes Dauerstrich-Radarsystem, welches auch als Frequency Modulated Continous Wave (FMCW) Radar bezeichnet wird, eine zuverlässige Abstandsbestimmung zwischen Objekten, die auch z.B. nur gering voneinander entfernt sind. Hierbei kommt typischerweise keine gepulste, sondern kontinuierliche, d.h. continuous wave (CW) Radarstrahlung zum Einsatz.

Beim frequenzmodulierten Dauerstrich-Radarsystem unterliegt die Frequenz der ausgesendeten Radarsignale einer periodischen Modulation, wodurch ausgesendete und von einem Objekt reflektierte Radarsignale beim Wiedereintreffen in das Radarsystem eine Frequenzverschiebung im Vergleich zu den gesendeten Radarsignalen aufweisen, die einem Laufzeitunterschied entspricht. Dieser Laufzeitunterschied gibt den zweifachen Abstand zwischen dem Sende- und Empfangsmodul und dem reflektierenden Objekt wieder.

Zur Lokalisierung oder Entfernungsbestimmung des reflektierenden Objekts werden empfangene Radarsignale im Empfangsmodul typischerweise einer spektralen Analyse unterzogen. Beispielsweise geben einzelne Peaks oder Spitzen im Leistungsspektrum der Frequenzverschiebung direkt Aufschluss über die Entfernung zwischen Sende- und Empfangsmodul und dem reflektierenden Objekt. So entsprechen z.B. große Frequenzverschiebungen großen Laufzeitunterschieden der Radarsignale und somit großen Entfernungen, während kleine Frequenzverschiebungen kleinen Laufzeitunterschieden und somit kleinen Entfernungen entsprechen.

Eine Abstandsbestimmung mittels Dauerstrich-Radarsystem erfordert daher die Bestimmung einer Frequenzverschiebung zwischen gesendeten und empfangenen Signalen. Hierzu ist eine entsprechend komplexe und mitunter kostenintensive Signalverarbeitung notwendig. Zusätzlich erfordert eine absolute Abstandsbestimmung eine relative große Trägerfrequenzbandbreite, die abhängig von der jeweiligen Einsatzumgebung des Systems mitunter nicht stets gewährleistet ist. Für spezielle Applikationen ist jedoch nicht eine genaue Abstandsbestimmung zwischen Objekten sondern lediglich eine Abstandsabgrenzung erforderlich. Das bedeutet, dass bei solchen Applikationen unterschieden werden muss, ob der Abstand zwischen den beiden Objekten größer oder kleiner als ein kritischer Abstand oder eine gewisse Abstandsschwelle ist.

Für solche Anwendungen ist daher eine komplexe Signalauswertung zur Bestimmung der Frequenzverschiebung nicht notwendig, da kein absoluter Abstandswert sondern lediglich eine Position bezüglich einer Abstandsgrenze bestimmt werden muss. Eine mögliche Anwendung hierfür ist zum Beispiel die Bestimmung, ob sich ein Objekt innerhalb eines definierten Bereichs um ein anderes Objekt herum befindet oder nicht. Dies ermöglicht zum Beispiel die Verwaltung eines Bedienbereichs im Umkreis einer technischen Anlage mit Hilfe eines drahtlosen Kommunikationsmittels, wie zum Beispiel einer Fernsteuerung.

Prinzipiell ist ein Dauerstrich-Radarsystem, welches eine Abstandsbestimmung zwischen zwei Objekten durchführen kann, für eine solche Aufgabe geeignet. Allerdings benötigt eine solche zu Grunde liegende Abstandsbestimmung aufwändige Auswertemittel zur Signalauswertung, die zumindest einer Frequenzverschiebung zwischen gesendeten und empfangenen Signalen bestimmt. Zudem Erfordern derartige abstandsbestimmende Radarsystem eine relativ hohe Bandbreite der Trägerfrequenz.

EP 1 109 03 offenbart ein Verfahren und eine Einrichtung zur Lokalisierung eines mobilen Terminals. Zur Lokalisierung des mobilen Terminals werden mindestens zwei (vorzugsweise mehrere) verschiedene Positionsschätzungen, die auf mit mindestens einer Basisstation ausgetauschten Funksignalen basieren, gemacht. Jede Positionsschätzung kann mit einem Wahrscheinlichkeitswert versehen werden. Als aktuelle Position wird diejenige bestimmt, die unter Berücksichtigung der in mindestens einem vergangenen Zeitpunkt ermittelten Positionsschätzung einen Fortbewegungspfad größer oder zumindest erhöhter Wahrscheinlichkeit ergibt. Die aktuelle Position wird daher nicht isoliert, sondern vor dem Hintergrund einer zeitlichen Verkettung hoher Wahrscheinlichkeit ermittelt. Als Messwert zur Ermittlung der Positionsschätzung wird nach diesem Dokument die Verbindungsqualität verwendet. Diese kann sich aus der Messung der Signalstärke des Empfangssignals, aus der Laufzeit zwischen Basisstationen und Terminal, aus der aktuellen Zugehörigkeit zu einer bestimmten Funkzelle des Kommunikationssystems, aus der Fehlerrate der übertragenen Daten, aus dem Signal-Rausch-Abstand oder anderen aus der Nachrichtentechnik bekannten Größen ergeben.

DE 101 04 916 A1 offenbart ein Verfahren zur Positionsbestimmung mit einem Mobilfunkgerät in einem Mobilfunknetz mit Basisstationen, wobei die Kommunikation zwischen Mobilfunkgerät und Basisstation über Signalisierungskanäle und Verbindungskanäle erfolgt. Nach dem in diesem Dokument beschriebenen Verfahren werden Testdaten über den Signalisierungskanal an mindestens drei Basisstationen gesendet. Die zurück übertragenen Testdaten werden sodann wieder empfangen. Sodann folgt ein Vergleich der zugehörigen gesendeten und empfangenen Testdaten zur Bestimmung von Fehlerraten bei der Datenübertragung. Der Abstand des Mobilfunkgeräts zu den Basisstationen wird als proportionaler Wert zu Fehlerraten bei der Datenübertragung zu den einzelnen Basisstationen berechnet. Ferner erfolgt eine Berechnung der aktuellen Position aus den Positionskoordination der entfernbaren Basisstationen und den berechneten Abständen zu den Basisstationen.

DE 103 10 158 A1 offenbart ein Zugangskontrollsystem für ein Objekt mit einer Basisstation, die eine Sende- und Empfangseinrichtung, die ein breitbandig moduliertes Abfragesignals aussendet aufweist. Das Zugangskontrollsystem hat ferner mindestens einen Transponder, der eine Modulationseinrichtung aufweist, um auf ein in einer Entfernung zur Basisstation empfangenes Abfragesignal, ein Hilfträgersignal, dessen Frequenz in Abhängigkeit eines Codes zwischen einer endlichen Anzahl von Frequenzlagen umgetastet wird, aufzumodulieren und als codemoduliertes Antwortsignal zu reflektieren. Das Zugangskontrollsystem hat zudem eine Auswerteeinrichtung, die der Sende- und Empfangseinrichtung nachgeschaltet ist und die das Antwortsignal in Seitenbändern der getasteten Frequenzlagen hinsichtlich Code und Entfernung auswertet.

DE 102 34 467 A1 beschreibt ein Verfahren zur automatisierten Steuerung einer technischen Anlage mit einer Mehrzahl von zur Abwicklung von Prozessschritten datenseitig miteinander verschalteten Anlagenkomponenten, denen von einer zentralen Steuereinrichtung unter Berücksichtigung von dort eingehenden Prozessführungssignalen erzeugte Steuerbefehle zugeführt werden, wobei in einer mobilen Bedieneinheit erzeugte Prozessführungssignale drahtlos an Schnittstellen übertragen und von diesen an die Steuereinrichtung weitergeleitet werden. Dazu wird erfindungsgemäß eine Freigabe derjenigen Anlagenkomponenten, für die bei der Erzeugung der zugehörigen Steuerbefehle die von der mobilen Bedieneinheit eingehenden Prozessführungssignale berücksichtigt werden, anhand eines Ortskennwerts für die mobile Bedieneinheit vorgenommen, zu dessen Ermittlung die drahtlos mit der mobilen Bedieneinheit kommunizierenden Schnittstellen benutzt werden.

Der Erfindung liegt somit die Aufgabe zu Grunde, ein Abstandsmesssystem für eine Abstandsbereichsbestimmung zur Verfügung zu stellen, welches mit einfachen Signalverarbeitungsmitteln und unter reduzierten Kosten eine scharfe Abstandsabgrenzung zwischen zwei Objekten unter Verwendung eines schmalbandigen Trägerfrequenzbereichs, der z.B. im Bereich einiger 100 kHz bis wenige MHz liegen kann.

Die Aufgabe wird mit dem in Patentanspruch 1 angegeben Abstandsmesssystem, dem in Anspruch 8 angegebenen Dauerstrich-Radarsystem, dem in Anspruch 9 angegebenen mobilen Bedien- und Beobachtungsgerät, dem in Anspruch 10 angegebenen HMI System sowie einem in Anspruch 11 angegebenen Verfahren zur Abstandsmessung gelöst. Weitere vorteilhafte Ausführungen der Erfindung sind in den jeweiligen Unteransprüchen angegeben.

Die Erfindung betrifft ein Abstandsmesssystem zur Bestimmung eines Abstandsbereichs zwischen einem ersten und einem zweiten Systemmodul und verfügt über Sende- und Empfangsmittel zum Übermitteln von Abfragesignalen und Funkantwortsignalen zwischen dem ersten und dem zweiten Systemmodul. Das Abstandsmesssystem verfügt weiterhin über eine Modulationseinheit zur Erzeugung der Funkantwortsignale mittels Modulation empfangener Abfragesignale mit einer Datensequenz und einer Auswerteeinheit zur Demodulation empfangener Funkantwortsignale zur Wiedergewinnung der Datensequenz und zur Bestimmung einer Fehlerrate der Wiedergewinnung.

Der Abstandsbereich ist hierbei durch einen Schwellwert der Fehlerrate der Wiedergewinnung der Datensequenz bestimmbar. Typischweise ist die Modulationseinheit räumlich von den Sende- und Empfangsmitteln und der Auswerteeinheit getrennt. Vorzugsweise ist daher die Modulationseinheit zum Beispiel im ersten Systemmodul und die Sende- und Empfangsmittel sowie die Auswerteeinheit im zweiten Systemmodul implementiert.

Vorzugsweise werden daher die Abfragesignale vom zweiten Systemmodul zum ersten Systemmodul gesendet, wo diese empfangen werden und einer Modulation mit einer Datensequenz unterzogen werden. Das empfangene und modulierte Abfragesignal wird dann von der Modulationseinheit zurück zum zweiten Systemmodul gesendet, wo die Empfangsmittel zum Empfang der modulierten Funkantwortsignale und zur Einspeisung der modulierten Funkantwortsignale in die Auswerteeinheit ausgebildet sind.

Dort werden die empfangenen und modulierten Funkantwortsignale einer Demodulation unterzogen und die gewonnene Datensequenz wird typischerweise mit der Datensequenz, die von der Modulationseinheit den Funkantwortsignalen aufgeprägt wurde, verglichen. Vorzugsweise ist die Datensequenz, mit der die von der Modulationseinheit empfangenen Abfragesignale moduliert werden, fest vorgegeben und ist in der Auswerteeinheit abgespeichert. Durch einen Vergleich der ursprünglichen, fest vorgegebenen Datensequenz mit der wiedergewonnen Datensequenz kann somit eine Fehlerrate der Wiedergewinnung ermittelt werden.

Der Erfindung liegt ferner die Annahme zu Grunde, das die Fehlerrate der Wiedergewinnung ab einem gewissen Abstand zwischen dem ersten und dem zweiten Systemmodul sprunghaft ansteigt, wodurch der zu bestimmende Abstandsbereich detektiert werden kann.

Innerhalb eines bestimmten Abstandsbereichs um das erste Systemmodul herum, wie zum Beispiel innerhalb eines Kreises um das erste Systemmodul mit einem Radius einiger Meter, liegt die Fehlerrate der Wiedergewinnung typischerweise innerhalb eines gewissen Toleranzbereichs. Die durch die Demodulation der empfangenen Funkantwortsignale wiedergewonnene Datensequenz weist daher eine hohe Ähnlichkeit mit der vordefinierten Datensequenz auf.

Ist der Abstand zwischen erstem und zweitem Systemmodul jedoch größer als der vorgegebene Abstandsbereich, so unterliegt die Demodulation der Funkantwortsignale eine Vieldeutigkeit, wodurch die empfangenen Funkantwortsignale nicht mehr eindeutig und daher fehlerhaft in eine Datensequenz umgesetzt werden. Konsequenterweise steigt daher die Fehlerrate der Wiedergewinnung deutlich an, wodurch das Abstandsmesssystem detektiert, dass sich das zweite Systemmodul außerhalb eines definierten Abstandsbereichs um das erste Systemmodul herum befindet. Ergänzend sei hier angemerkt, dass der Abstandsbereich zwar typischerweise zirkularsymmetrisch ist, aber auch jegliche davon abweichende Geometrie aufweisen kann.

Folglich ist zur Verwaltung eines Abstandsbereichs um eines der Systemmodule herum keine aufwendige spektrale Signalanalyse empfangener Funkantwortsignale notwendig. Auf eine etwaige Fourier-Transformation oder Fourier-Analyse zur Bestimmung eines Frequenzunterschieds zwischen ausgesendeten Abfragesignalen und empfangenen Funkantwortsignalen kann effektiv verzichtet werden. Somit kann eine scharfe Abstandsabgrenzung mit einem geringen Komplexitätslevel und einem geringen Kostenaufwand zuverlässig und effektiv bei einer geringen zur Verfügung stehenden Bandbreite realisiert werden. So stehen z.B. im ISM Band bei 433 MHz nur weniger als 2 MHz an Bandbreite zur Verfügung.

Bei einer bevorzugten Ausführungsform der Erfindung verfügt das Abstandsmesssystem zur Bestimmung des Abstandsbereichs über ein frequenzmoduliertes Dauerstrich-Radarsystem zur Erzeugung und Auswertung der Abfragesignale und Funkantwortsignale. Typischerweise unterliegen die ausgesendeten Abfragesignale einer linearen Frequenzverschiebung, einem sogenannten Frequenz-Sweep. Ferner werden bei einem solchen Dauerstrich-Radarsystem die Abfragesignale kontinuierlich, d.h. nicht gepulst gesendet.

Die von der Modulationseinheit modulierten und reflektierten Funkantwortsignale weisen daher eine Frequenzverschiebung beim Eintreffen bei den Empfangsmitteln im Vergleich zur Frequenz der zur gleichen Zeit gesendeten Abfragesignale auf. Ein Dauerstrich-Radarsystem ist typischerweise zur Ermittlung dieser Frequenzverschiebung ausgebildet. Erfindungsgemäß kann jedoch auf eine derartige frequenzverschiebungsbestimmende Funktion des Radarsystems verzichtet werden. Damit wird vermieden, dass für die Abstandsabgrenzung eine große Frequenzbandbreite benötigt wird.

Bei einer weiteren bevorzugten Ausführungsform der Erfindung verfügt das Abstandsmesssystem über ein Stepped Frequenz Radarsystem zur Erzeugung und Auswertung der Abfragesignale und Funkantwortsignale. Hierbei unterliegt die Trägerfrequenz des Radarsystem keiner kontinuierlichen sondern einer sprunghaften Änderung. Diese Sprunghafte Änderung der Trägerfrequenz bewirkt zudem eine sprunghafte Änderung der Phase empfangener Funkantwortsignale, die wiederum die Fehlerrate der Wiedergewinnung der Datensequenz maßgeblich beeinflusst. Die Trägerfrequenz kann hierbei mehrfach sprunghaft geändert werden, vorzugsweise kommen zwei verschiedene Trägerfrequenzen zum Einsatz, um die Komplexität des System möglichst gering zu halten.

Bei einer weiteren bevorzugten Ausführungsform der Erfindung ist die Fehlerrate der Wiedergewinnung der Datensequenz durch eine Phasenverschiebung zwischen dem gesendeten Abfragesignal und dem empfangen Funkantwortsignal bestimmt. Folglich ist die Auswerteeinheit des Abstandsmesssystems zur Bestimmung der Phasenverschiebung zwischen gesendeten Abfragesignalen und korrespondierenden empfangenen Funkantwortsignalen ausgebildet.

Liegt die Phasenverschiebung innerhalb eines bestimmten Intervalls, so ist eine Demodulation der empfangenen Funkantwortsignale zur Wiedergewinnung der Datensequenz ohne weiteres möglich, während bei einer Überschreitung einer Phasenverschiebungsgrenze die Datensequenz nicht mehr fehlerfrei und eindeutig rekonstruierbar ist. Als Konsequenz steigt die Fehlerrate der Wiedergewinnung oder Rekonstruktion der Datensequenz sprunghaft ab einem gewissen Schwellwert der Phasenverschiebung an. Dieser Schwellwert der Phasenverschiebung ist daher mit dem zu bestimmenden Abstandsbereich korreliert.

Die Schwellwertdetektion der Fehlerrate zur Abstandsabgrenzung ermöglicht auch, dass anstatt eines FMCW- Signals das Stepped- Frequenz- Prinzips mit fixen, vorzugsweise mit zwei Trägersignalen, die den Start- und Stopphasen entsprechen, verwendet werden kann. Dies erlaubt eine effizientere Nutzung der Signalenergie im Vergleich zu einem herkömmlichen FMCW-Radarssystem.

Bei einer weiteren Ausführungsform der Erfindung ist die Phasenverschiebung durch den Abstand zwischen dem ersten und dem zweiten Systemmodul, dem Frequenzhub des Dauerstrich-Radarsystems und durch die Länge der Datensequenz bestimmt. Zusätzlich ist die maximal erlaubte Phasenverschiebung für eine korrekte Demodulation durch die Art der Modulation gegeben. Den Anforderungen des Abstandsmesssystems entsprechend kann die Modulationsart sowie der Frequenzhub und die Länge der Datensequenz beliebig angepasst werden, um somit den Abstandsbereich oder die Abstandsabgrenzung den jeweiligen Erfordernissen individuell anzupassen.

Bei einer weiteren Ausführungsform der Erfindung ist die Modulation durch eine Binary Phase Shift Keying (BPSK), eine Quadrature Phase Shift Keying (QPSK), eine 8-PSK, eine 16-PSK oder generell durch eine M-Way Phase Shift Keying (MPSK) Modulation ausgebildet andere Modulationsarten, wie QAM o.ä. sind analog anwendbar. Somit wird durch eine Phasenmodulation die vorgegebene Datensequenz auf empfangene Abfragesignale innerhalb der Modulationseinheit zur Erzeugung der Funkantwortsignale aufgeprägt. Die Auswerteeinheit verfügt demnach über ein entsprechendes Demodulationsverfahren, so dass prinzipiell eine Wiedergewinnung der Datensequenz durch Demodulation in der Auswerteeinheit ermöglich wird.

Typischerweise ist die Symbolunterscheidungsgrenze bei der Demodulation stark von der gewählten Modulationsart abhängig.

Beim Binary Phase Shift Keying (BPSK) werden die empfangenen Signale entweder einer logischen Null oder einer logischen Eins zugeordnet. Dies bedeutet, dass das Entscheidungsintervall des komplexen I/Q-Phasenraums über ein Intervall von 180° gegeben ist. Zum Beispiel kann für eine Phasenverschiebung von 270° bis +90° die logische Null und im Intervall von 90° bis 270° die logische Eins dem empfangenen Funkantwortsignal zugeordnet werden. Beim QPSK-Modulationsverfahren verringert sich das Symbolunterscheidungsintervall auf einen Bereich von 90° und beim 8-PSK Modulationsverfahren sogar auf ein Intervall von 45°. Die Phasenverschiebung hängt natürlich auch von der verwendeten Trägerfrequenz, dem Frequenzhub und von der Länge der Datensequenz ab. Wobei die Länge der Datensequenz nur bei dem FMCW- Verfahren und nicht bei dem Stepped- Frequenz- Verfahren eine Relevanz hat.

Ein weiterer Vorteil der Erfindung besteht darin, dass der Frequenzhub des FMCW-Radars relativ gering ausgelegt werden kann. Für die erfindungsgemäße Abstandsabgrenzung ist eine geringe Bandbreite im Bereich einiger MHz bei einer Trägerfrequenz im ISM-Band bereits ausreichend. Durch einen solch geringen Frequenzhub kann die effektive Sendeleistung der Abfragesignale in manchen ISM- Bändern, wie z.B. beim 2.4 GHz ISM- Band, deutlich erhöht werden, wodurch der messbare Abstand oder der Radius des Abstandsbereichs ebenfalls vergrößert werden kann.

Bei einer weiteren Ausführungsform der Erfindung ist die Modulationsart und somit die Entscheidungsgrenze der Phasenverschiebung beliebig durch einen Benutzer bestimmbar. Vorzugsweise wird eine solche Bestimmung der Modulationsart vor Inbetriebnahme des Abstandsmesssystems durch den Benutzer initiiert und durchgeführt. Typischerweise geschieht dies mittels eines Kalibrierverfahrens, in dem der Frequenzhub des Dauerstrich-Radarsystems deaktiviert ist. Dies ermöglicht einen Abgleich zwischen dem ersten und dem zweiten Systemmodul und einem Abgleich der zu übermittelnden Datensequenz. Durch dieses Kalibrierverfahren werden somit Modulationsart, Entscheidungsgrenzen für die Phasenverschiebung und die zu übermittelnde Datensequenz für die anstehende Abstandsbereichsbestimmung festgelegt. Durch ein solches Kalibrierverfahren können somit beliebige Systemmodule des Abstandsmesssystems miteinander kombiniert und aufeinander abgestimmt werden.

Bei einer weiteren bevorzugten Ausführungsform der Erfindung ist das erste Systemmodul als stationärer Transponder und das zweite Systemmodul als mobiles Radargerät zum Senden von Abfragesignalen und zum Empfangen von Funkantwortsignalen ausgebildet. Der Transponder ist hierbei zur Erzeugung von Funkantwortsignalen in Antwort auf empfangene Abfragesignale ausgebildet. Vorzugsweise übernimmt der Transponder gänzlich die Funktion der Modulationseinheit zur Erzeugung der Funkantwortsignale mittels Modulation empfangener Abfragesignale mit der Datensequenz. Das Radargerät weist hierbei typischerweise die Sende- und Empfangsmittel als auch die Auswerteeinheit zur Demodulation der empfangenen Funkantwortsignale zur Wiedergewinnung der Datensequenz auf.

Zusätzlich kann das mobile Radargerät über Ein- und Ausgabemittel verfügen, die einem Benutzer eine benutzerspezifische Kalibrierung und Anpassung des Radargeräts an eine vorgegebene Applikation ermöglichen und dem Benutzer anzeigen, ob sich das mobile Radargerät innerhalb oder außerhalb des spezifizierten Abstandsbereichs befindet.

Für das Radarsystem oder Abstandsmesssystem ergeben sich vielfältige Anwendungsgebiete, insbesondere im Bereich von Gebäude- oder Fahrzeugzugangssystemen. So kann z.B. ein spezifizierter Abstandsbereich um einen Eingangsbereich eines Gebäudes, eines Gebäudetrakts oder um ein Fahrzeugs herum definiert werden. Zutrittsberechtigte Personen sind dann z.B. mit entsprechenden mobilen Radargeräten ausgestattet, die mit dem in der Nähe des Eingangsbereichs positionierten Transponder Funksignale austauschen. Sinkt die Fehlerrate der Demodulation empfangener Funkantwortsignale unter den definierten Schwellwert, so ist dies ein Indiz dafür, dass sich die Person in unmittelbarer Nähe zum Eingangsbereich oder Zutrittsbereich befindet, wodurch das System autonom eine Aktion, wie z.B. das Öffner einer Tür auslösen kann.

In einem weiteren Aspekt betrifft die Erfindung ein Dauerstrich-Radarsystem zur Bestimmung eines Abstandsbereichs zwischen einem Radargerät und einem Transponder. Das Dauerstrich-Radarsystem verfügt hierbei über Sende- und Empfangsmittel zur Übermittlung von Abfragesignalen und Funkantwortsignalen zwischen dem Radargerät und dem Transponder und einer Modulationseinheit zur Erzeugung der Funkantwortsignale mittels Modulation empfangener Abfragesignale mit einer Datensequenz.

Typischerweise werden die Funkantwortsignale vom Transponder in Antwort auf ein Empfangen von Abfragesignalen erzeugt. Ferner verfügt das Dauerstrich-Radarsystem über eine Auswerteeinheit zur Demodulation empfangener Funkantwortsignale zur Wiedergewinnung der Datensequenz und zur Bestimmung einer Fehlerrate der Wiedergewinnung. Hierbei ist der Abstandsbereich durch einen Schwellwert der Fehlerrate bestimmbar. Die Fehlerrate steigt typischerweise sprunghaft an, wenn eine Phasenverschiebung zwischen gesendeten Abfragesignalen und empfangenen Funkantwortsignalen eine von der Modulationsart abhängige Phasenverschiebungsschwelle überschreitet.

In einem weiteren Aspekt betrifft die Erfindung ein mobiles Bedien- und Beobachtungsgerät für die Automatisierungskomponenten einer technischen Anlage mit einem Lokalisierungsmodul zur Abstandsabgrenzung zwischen dem mobilen Bedien- und Beobachtungsgerät und der technischen Anlage. Hierbei ist das Lokalisierungsmodul mit Sende- und Empfangsmitteln zum Übermitteln von Abfragesignalen und Funkantwortsignalen zwischen dem Lokalisierungsmodul und einem Transponder ausgestattet. Der Transponder dient der Erzeugung der Funkantwortsignale mittels Modulation empfangener Abfragesignale mit einer Datensequenz in Antwort auf ein Empfangen von Abfragesignalen. Ferner verfügt das Lokalisierungsmodul über eine Auswerteeinheit zur Demodulation empfangener Funkantwortsignale zur Wiedergewinnung der Datensequenz und zur Bestimmung einer Fehlerrate der Wiedergewinnung. Der zu bestimmende Abstandsbereich ist hierbei durch einen Schwellwert der Fehlerrate bestimmbar.

In einem weiteren Aspekt betrifft die Erfindung ein HMI System mit zumindest einem mobilen Bedien- und Beobachtungsgerät für die Automatisierungskomponenten einer technischen Anlage mit einem Dauerstrich-Radarsystem zur Abstandsabgrenzung des mobilen Bedien- und Beobachtungsgeräts. Hierbei ist das Dauerstrich-Radarsystem mit Sende- und Empfangsmitteln zum Übermitteln von Abfragesignalen und Funkantwortsignalen zwischen einem Radargerät und einem Transponder ausgestattet. Der Transponder dient hierbei der Erzeugung der Funkantwortsignale mittels Modulation empfangener Abfragesignale mit einer Datensequenz in Antwort auf ein Empfangen von Abfragesignalen. Ferner verfügt das Dauerstrich-Radarsystem über eine Auswerteeinheit zur Demodulation empfangener Funkantwortsignale zur Wiedergewinnung der Datensequenz und zur Bestimmung einer Fehlerrate der Wiedergewinnung. Der Abstandsbereich ist hierbei durch einen Schwellwert der Fehlerrate der Wiedergewinnung bestimmbar.

In einem weiteren Aspekt betrifft die Erfindung ein Verfahren zur Abstandsmessung mittels Bestimmung eines Abstandsbereichs zwischen einem ersten und einem zweiten Systemmodul. Das Verfahren zur Abstandsmessung und zur Bestimmung des Abstandsbereichs besteht aus den Schritten: Übermitteln von Abfragesignalen und Funkantwortsignalen zwischen dem ersten und dem zweiten Systemmodul, Erzeugen von Funkantwortsignalen mittels Modulation empfangener Abfragesignale mit einer Datensequenz und dem Demodulieren empfangener Funkantwortsignale zur Wiedergewinnung der Datensequenz und zur Bestimmung einer Fehlerrate der Wiedergewinnung. Hierbei ist der Abstandsbereich durch einen Schwellwert der Fehlerrate bestimmbar, die bei einem bestimmten Abstand zwischen erstem und zweitem Systemmodul sprunghaft ansteigt.

Bevorzugte Ausführungsformen der Erfindung werden nachfolgend anhand der Zeichnungen näher erläutert. Es zeigen:
- FIG 1: ein schematisches Blockdiagramm des Abstandsmesssystems,
- FIG 2: ein Diagramm der Fehlerrate gegen den Abstand zwischen den beiden Systemmodulen,
- FIG 3: ein Blockdiagramm des HMI Systems,
- FIG 4: ein Blockdiagramm des Lokalisierungsmoduls eines mobilen Bedien- und Beobachtungsgeräts,
- FIG 5: ein I/Q Diagramm einer QPSK-Modulation mit Symbolunterscheidungsgrenzen.

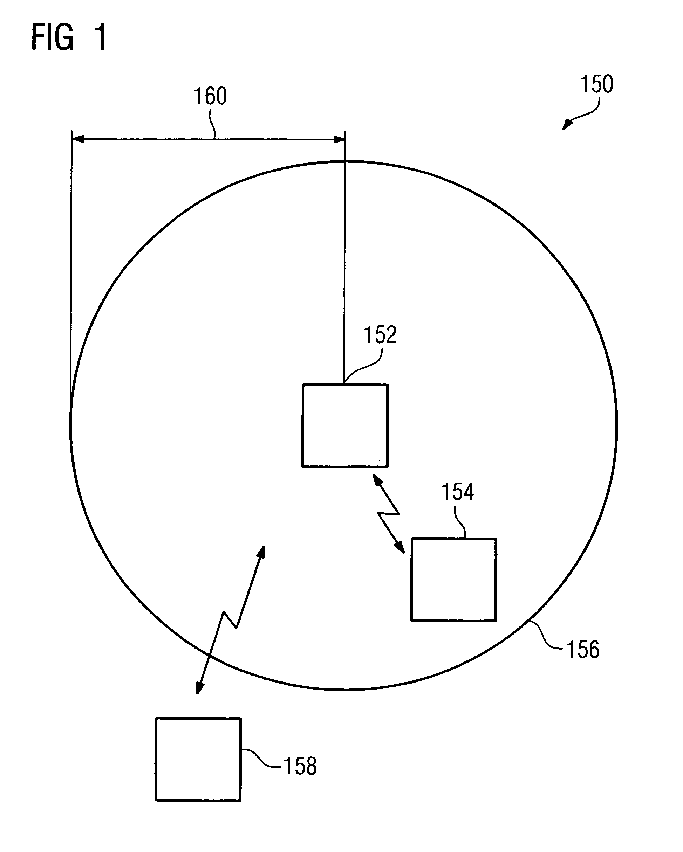

FIG 1 zeigt ein schematisches Blockdiagramm des erfindungsgemäßen Abstandsmesssystems 150. Das Messsystem besteht im wesentlichen aus einem ersten Systemmodul 152 und einem zweiten Systemmodul 154. Die Systemmodule 152, 154 verfügen über Sende- und Empfangsmittel zum Übermitteln von Abfragesignalen und Funkantwortsignalen. Des weiteren ist zumindest eines der beiden Systemmodule 152, 154 mit einer Modulationseinheit zur Erzeugung der Funkantwortsignal mittels Modulation empfangener Abfragesignale mit einer Datensequenz ausgebildet. Diese Funktionalität ist typischerweise im ersten Systemmodul 152 implementiert. Das zweite Systemmodul 154 verfügt schließlich über eine Auswerteeinheit zur Demodulation empfangener Funkantwortsignale zur Wiedergewinnung der vom ersten Systemmodul aufmodulierten Datensequenz.

Zudem ist die Auswerteeinheit des zweiten Systemmoduls 154 zur Bestimmung einer Fehlerrate der Wiedergewinnung ausgebildet. Ein abrupter Anstieg der Fehlerrate mit ist ein Indiz dafür, dass sich das zweite Systemmodul 154 außerhalb des Abstandsbereich 156 des ersten Systemmoduls 152 befindet. In diesem Fall ist der Abstandsbereich 156 durch ein zirkularsymmetrisches Areal um das erste Systemmodul 152 herum gebildet. Der Abstand 160 entspricht dem Radius dieses kreisförmigen Abstandsbereichs 156.

Die erfindungsgemäße Verwendung des Abstandssystems 150 ermöglicht nun zu unterscheiden, ob sich das zweite Systemmodul 154 innerhalb des Abstandsbereichs 156 oder wie zum Beispiel das Systemmodul 158 außerhalb des durch das erste Systemmodul definierten Abstandsbereichs 156 befindet.

Typischerweise ist die durch das erste Systemmodul 152 durchgeführte Modulation eine Phasenmodulation empfangener Abfragesignale. Diese ist zum Beispiel durch eine BPSK, QPSK oder allgemein durch eine M-Way Phase Shift Keying (MPSK-Modulation) ausgebildet. Zusätzlich dazu verfügen die Systemmodule 152, 154 über Systemkomponenten eines frequenzmodulierten Dauerstrich-Radarsystems oder über Systemkomponenten von Stepped- Frequenz- oder allgemein über Komponenten eines Mehrträger- Radarsystems, die vorzugsweise als Zweiträgersysteme implementiert sein können. Die von dem zweiten Systemmodul 154 ausgesendeten Abfragesignale und empfangenen Funkantwortsignale unterliegen somit einer kontinuierlichen Phasenverschiebung bei FMCW- oder sprunghaften Phasenverschiebung bei Zweiträger- Radarsystem.

Die Datensequenz, die mittels des ersten Systemmoduls den Funkantwortsignalen aufgeprägt wird, kann im zweiten Systemmodul 154 nur dann eindeutig rekonstruiert werden, wenn die Phasenverschiebung zwischen gesendeten Abfragesignalen und Funkantwortsignalen innerhalb eines Symbolunterscheidungsintervalls liegt. Dieses Symbolunterscheidungsintervall ist im Wesentlichen durch die Art der Modulation vorgegeben. Die Phasenverschiebung ist zudem im hohen Maße von der verwendeten Trägerfrequenz, vom Frequenzhub oder dem Frequenzabstand zwischen den Trägern, der Länge der Datensequenz, der Daten-übertragungsrate sowie vom Abstand der beiden Systemmodule 152, 154 abhängig. Je nach Systemanforderungen können diese Parameter beliebig modifiziert werden.

Dadurch, dass das erfindungsgemäße Abstandsmesssystem lediglich eine Abstandsgrenze, die durch den Abstandsbereich 156 vorgegeben ist, detektiert, kann das Abstandsmesssystem oder das in diesem implementierten Dauerstrich-Radarsystem auf Mittel zur absoluten Abstandsbestimmung zwischen den beiden Systemmodulen 152, 154 verzichten, wodurch das erfindungsgemäße Abstandsmesssystem mit einem geringeren Grad an Komplexität und kosteneinsparend implementiert werden kann.

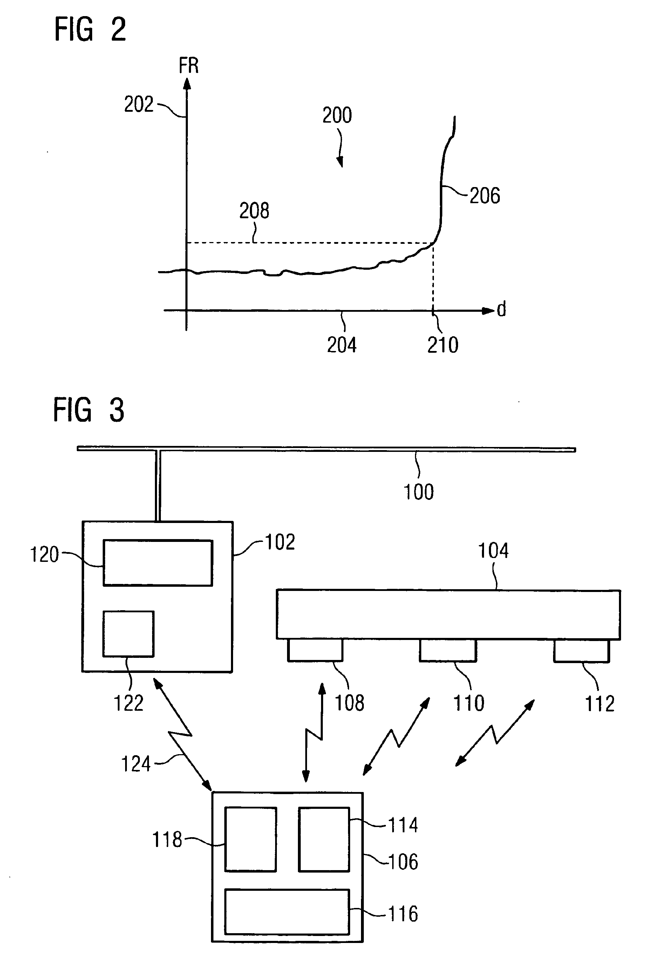

FIG 2 zeigt ein Diagramm 200, in dem eine Fehlerrate (FR) 202 gegen den Abstand d 204 exemplarisch aufgetragen ist. Für relativ geringe Abstände zwischen den beiden Systemmodulen 152, 154 bleibt die Fehlerrate nahezu konstant, wie auf der linken Seiten vom Graphen 206 dargestellt. Für einen gewissen Abstand d 210 steigt jedoch die Fehlerrate 206 sprunghaft an. Dieses sprunghafte Ansteigen der Fehlerrate ist ein Indiz dafür, dass die beiden Systemmodule 152, 154 in einem Abstand 160 voneinander entfernt sind, der dem Radius des Abstandsbereichs 156 entspricht. Die Linie 208 im Diagramm 200 stellt somit den Schwellwert der Fehlerrate dar und der Schnittpunkt des Graphen 206 mit diesem Schwellwert 208 bestimmt somit den Abstand d 210, der den Abstand 160 aus Figur 1 entspricht.

FIG 3 zeigt beispielhaft eine technische Anlage 104 mit technischen Betriebsmitteln für die das erfindungsgemäße Abstandsmesssystem eingesetzt werden kann. Die technischen Betriebsmittel sind z.B. Bestandteil einer fertigungs- oder prozesstechnischen Vorrichtung. Zu deren Steuerung sind Automatisierungskomponenten 102 vorhanden, die auf die technischen Betriebsmittel, insbesondere durch Vermittlung von Messwertgebern, Stellungsreglern und verschiedenen anderen sogenannten "Process Instruments" eingreifen. Die Automatisierungskomponenten 102 verfügen beispielhaft über ein Automatisierungsgerät, wie z.B. eine speicherprogrammierbare Steuerung 120, welcher die Steuerung der technischen Betriebsmittel gegebenenfalls in Echtzeit bewirkt.

Technische Anlagen sind hierbei alle Arten von technischen Geräten und Systemen sowohl in Einzelanordnung als auch in datentechnischer Vernetzung z.B. über einen Feldbus. Bei industriellen Anwendungen fallen darunter einzelne Betriebsmittel, z.B. Antriebe und Bearbeitungsmaschinen. Eine technische Anlage kann aber auch eine Produktionsanlage sein, bei der mit lokal verteilten Betriebsmitteln ein gesamter technischer Prozess betrieben wird, z.B. eine chemische Anlage oder Fertigungsstraße. Technische Anlagen werden mit speziellen digitalen Datenverarbeitungssystemen, auch Automatisierungskomponenten genannt, gesteuert und bedient. In einem solchen System sind einerseits zur direkten Steuerung der technischen Anlage dienende Komponenten vorhanden, d.h. speicherprogrammierbare Steuerungen SPS, auch als "PLC - Programmable Logic Controller" bezeichnet. Zur Entlastung dieser Steuerungen weisen Automatisierungen weitere spezielle Geräte auf, welche eine Schnittstelle für Bedienpersonal bilden. Diese werden als Geräte zum "Bedienen- und Beobachten", abgekürzt "B+B", oder als HMI Geräte, d.h. Human Machine Interface, bezeichnet.

Der Begriff HMI Gerät ist ein Oberbegriff und umfasst alle zu dieser Gruppe von Geräten gehörigen Komponenten. Als ein Beispiel sollen "Operator Panels ", auch als "Bedienpanels" bzw. kurz als "OP" bezeichnet, genannt werden. Diese können stationär oder mobil ausgeführt sein. HMI Geräte dienen in einer vernetzten Automatisierung als Hilfsmittel für Bedienpersonal, um Prozessdaten der zu steuernden technischen Anlage anzeigen oder bedienen zu können. Diese Funktion wird mit "Supervisor Control and Data Akquisition"(SCADA) bezeichnet. Hierzu ist das HMI Gerät in der Regel hardwaremäßig speziell aufgebaut, d.h. es verfügt z.B. über einen Touchscreen und ist gegen Umwelteinflüsse besonders abgeschirmt. Weiterhin wird darin eine spezielle Software ausgeführt. Diese stellt Funktionen bereit, womit Komfort, Qualität und Sicherheit einer Bedienung durch eine Bedienperson verbessert. So können über HMI Geräte z.B. interaktive Prozessabbilder der zu bedienenden technischen Anlage visualisiert, bedient, projektiert und generiert werden. Hiermit ist einerseits eine selektive Anzeige von Reaktionen der technischen Anlage möglich, meist in Form von Messwerten und Meldungen. Andererseits wird es durch gezielte Vorgabe von Bedienhandlungen und Dateneingaben ermöglicht, die technische Anlage in gewünschte Zustände zu überführen.

Die Automatisierungskomponenten 102 sind vorzugsweise an ein Bussystem 100, wie z.B. einen Profibus, angegliedert. Dies ermöglicht eine universelle Vernetzung mehrerer Automatisierungskomponenten 102.

Zur Bedienung und Beobachtung der Automatisierungskomponenten 102 und z.B. von deren ablaufenden Steuerungs-, Diagnose-, Alarmverarbeitungs- und Langzeitbeobachtungsprozessen ist zumindest ein mobiles Bedien- und Beobachtungsgerät 106 vorhanden. Dieses kann z.B. als ein kabelloses Hand-Held Terminal ausgeführt sein und z.B. über ein Display und eine Tastatur 116 verfügen. Weiterhin können Not-, Aus- und Quittungstaste und Schlüsselschalter vorgesehen sein. Das mobile Bedien- und Beobachtungsgerät 106 tauscht in einer berührungslosen Weise Nutzdaten über eine Funkstrecke 124 mit den Automatisierungskomponenten 102 der technischen Anlage 104 aus. Eine Bedienperson, die das Bedien- und Beobachtungsgerät 106 gebraucht, kann sich somit z.B. Messwerte von der technischen Anlage 104 auf dem Display des Bedien- und Beobachtungsgeräts 106 anzeigen lassen, bzw. Steuerbefehle über deren Tastatur 116 eingeben und diese an die Automatisierungskomponenten 102 senden.

Zur Übermittlung von z.B. Messwerten und Steuerbefehlen zwischen dem mobilen Bediengerät 106 und den Automatisierungskomponenten 102 verfügen das mobile Bediengerät 106 sowie die Automatisierungskomponenten 102 über entsprechende Datenübertragungsmodule 118, 122. Diese Datenübertragung wird vorzugsweise mit Hilfe von Radiofrequenz (RF) Signalen realisiert. Hierbei können eine Vielzahl von verschiedenen Datenübertragungsprotokollen, wie z.B. WLAN, IEEE 802.11, Ultra Wide Band (UWB) oder BlueTooth Protokolle zum Einsatz kommen.

Das mobile Bediengerät 106 verfügt zudem über ein Lokalisierungsmodul 114, das zum Senden und zum Empfangen von Radarsignalen ausgebildet ist. Die technische Anlage 104 verfügt zudem über mindestens einen Transponder. Vorzugsweise verfügt die Anlage über eine Reihe von Transpondern 108, 110, 112, die an verschiedenen Referenzpunkten an der technischen Anlage 104 angebracht sind. Die Transponder sind dazu ausgebildet, die vom Lokalisierungsmodul 114 ausgesendeten Radarsignale zu modulieren und zu reflektieren. Die von den Transpondern 108, 110, 112 modulierten und reflektierten Radarsignale können dann von dem Lokalisierungsmodul 114 empfangen und zur Lokalisierung des mobilen Bediengeräts 106 ausgewertet werden. Das mobile Bediengerät 106 ist somit in der Lage, eine Positions- oder Abstandsbestimmung von den Transpondern 108, 110, 112 selbsttätig durchzuführen. Die Transponder 108, 110, 112 müssen hierbei keine Signalauswertung vornehmen.

Das Lokalisierungsmodul 114 ist vorzugsweise mit dem erfindungsgemäßen short-range FMCW-Radar ausgestattet und die einzelnen Transponder 108, 110, 112 sind zur Modulation empfangener Radarsignale und zum Reflektieren daraus resultierender modulierter Radarsignale ausgebildet.

In einer anderen bevorzugten Variante des Lokalisierungsmoduls wird die Trägerfrequenz zwischen zwei Werten sprunghaft umgeschaltet. Mittels einer von den Transpondern 108, 110, 112 durchgeführten Subträger-Modulation können die von den Transpondern reflektierten Radarsignale selektiv ausgewertet werden. Die Subträger-Modulation ermöglicht somit eine Trennung von Hintergrundsignalen und Signalen, die an den Transpondern reflektiert wurden. So entspricht z.B. das erste Systemmodul 152 von Figur 1 einem der Transponder 108, 110, 112, während das zweite Systemmodul 154 dem mobilen Bedien-und Beobachtungsgerät 106 entspricht oder wobei zumindest die Funktion der Sende- und Empfangsmittel sowie die Auswerteeinheit im Lokalisierungsmodul 114 des mobilen Bedien- und Beobachtungsgerät 106 implementiert ist.

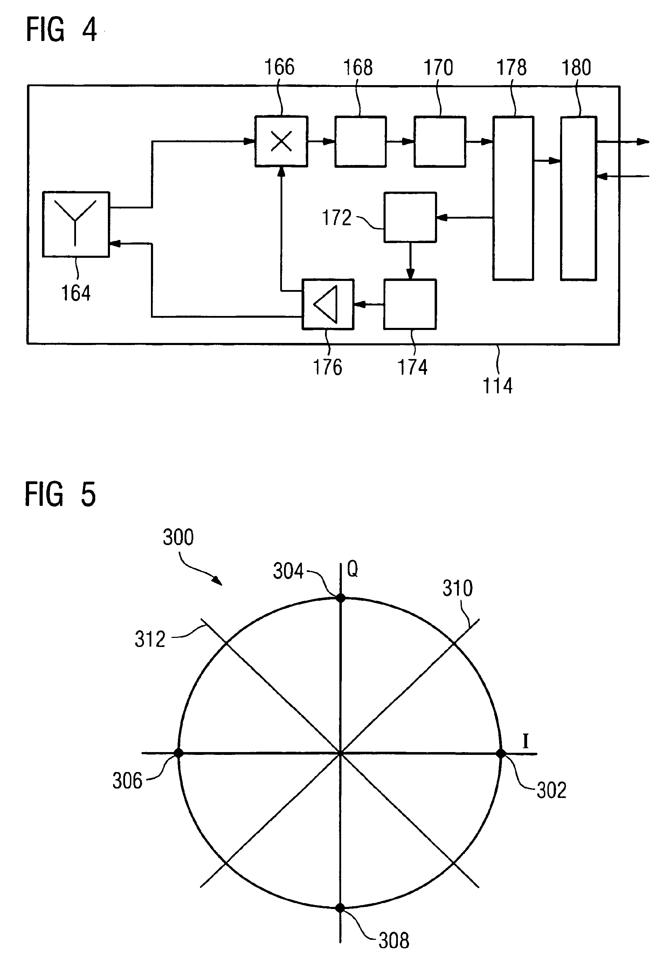

FIG 4 zeigt ein Blockdiagramm des Lokalisierungsmoduls 114, welches eine Sende- und Empfangsantenne 164, einen I/Q Mischer 166, eine Demodulationseinheit 168, ein Fehlermodul 170, eine Kontrolleinheit 178, eine Schnittstelle 180, einen Funktionsgenerator 172, einen spannungskontrollierten Oszillator 174 sowie einen Verstärker 176 aufweist. Das Lokalisierungsmodul 114 ist demnach zum Erzeugen eines frequenzmodulierten Sendesignals mittels dem spannungskontrollierten Oszillator 174 und dem Funktionsgenerator 172 ausgebildet. Der Funktionsgenerator 172 wird hierbei typischerweise von der Kontrolleinheit 178, die zum Beispiel in Form eines Mikro-Controllers ausgebildet ist, angesteuert und erzeugt eine dreieckförmige, sägezahnförmige oder rechteckförmige Ausgangsspannung, die in den spannungskontrollierten Oszillator 174 eingespeist wird.

Diese erzeugt in Abhängigkeit von der eingespeisten dreieckförmigen, sägezahnförmigen oder rechteckförmige Spannungssignale ein vorzugsweise linear- oder rechteck- frequenzmoduliertes Ausgangssignal, das vom Verstärker 176 hinreichend verstärkt und schließlich in die Sendeantenne 164 eingespeist wird.

Empfangene, von den Transpondern 108, 110, 112 mit einer Datensequenz modulierte Funkantwortsignale, werden von der Antenne 164 empfangen und in den I/Q Mischer 166 eingespeist. Mit Hilfe dieses Mischprozesses kann die relative Phasenlage der gesendeten Abfragesignale und empfangenen Funkantwortsignale ermittelt werden. Abhängig von der spezifischen Systemkonfiguration gibt die Größe der Phasenverschiebung darüber Aufschluss, ob der Abstand zwischen zum Beispiel Transponder 108 und dem mobilen Bedien- und Beobachtungsgerät 106 innerhalb oder außerhalb des Abstandsbereichs 156 liegt. Zur Ermittlung, ob die Phasenverschiebung oberhalb oder unterhalb einer durch die Modulationsart vorgegebenen Symbolunterscheidungsgrenze liegt, ist der Ausgang des I/Q Mischers 166 an die Demodulationseinheit 168 gekoppelt.

Die Demodulation der Demodulationseinheit 168 ist zum Beispiel auf die Modulation des Transponders 108 abgestimmt. Die Art der Modulation, bzw. Demodulation kann hierbei vom Benutzer vorgegeben werden und ermöglicht eine variable Einstellung der Symbolunterscheidungsgrenzen im I/Q Phasendiagramm und somit auch eine Einstellung und Modifikation der Größe des Abstandsbereichs 156.

Die Demodulationseinheit 168 dient der Demodulation der empfangenen Funkantwortsignale zur Rekonstruktion der vom Transponder 108 aufgeprägten Datensequenz. Die Datensequenz ist typischerweise fest vorgegeben und innerhalb des Lokalisierungsmoduls 114 bekannt. Die Datensequenz als auch die Modulationsart sowie weitere Parameter, wie zum Beispiel Frequenzhub, Trägerfrequenz und Länge der Datensequenz können mit Hilfe eines initiierenden Kalibrierverfahrens eingestellt werden.

Das Fehlermodul 170 vergleicht die vordefinierte Datensequenz mit der aus der Demodulation gewonnenen Datensequenz und dient somit einer Bestimmung einer Fehlerrate. Liegt zum Beispiel die Phasenverschiebung oberhalb einer durch die Modulation vorgegebenen Symbolunterscheidungsgrenze ist prinzipiell keine eindeutige Demodulation mehr möglich, wodurch die Fehlerrate der Demodulation sprunghaft ansteigt. Demnach wird zweckmäßigerweise im Fehlermodul 170 ein Schwellwert der Fehlerrate eingestellt, mittels dessen der sprunghafte Anstieg aufgrund des Überschreitens einer Symbolunterscheidungsgrenze im I/Q Diagramm detektierbar ist.

Das Fehlermodul 170 ist schließlich an den zentralen Controller 178 des Lokalisierungsmoduls 114 gekoppelt, der das Ausgangssignals des Fehlermoduls auswertet und an die Schnittstelle 180 zur weiteren Verarbeitung übermittelt. So kann zum Beispiel aufgrund der ermittelten Fehlerrate eine Anzeige gesteuert werden, die einem Benutzer des Systems anzeigt, dass sich das mobile Bedien- und Beobachtungsgerät 106 außerhalb des definierten Abstandsbereichs 156 um die technische Anlage 104 herum befindet. Ferner kann auf der Grundlage der Abstandsbereichsbestimmung eine Aktivierung bzw. Deaktivierung bestimmter sicherheitsrelevanter Funktionen der technischen Anlage 104 erfolgen.

FIG 5 zeigt ein I/Q-Phasendiagramm 300 einer QPSK-Modulation. In dem Diagramm sind vier verschiedene Punkte 302, 304, 306, 308 wiedergegeben, die zum Beispiel vier unterschiedlichen binären Werten 00, 01, 10, 11 entsprechen. Ferner sind zwei Symbolunterscheidungsgrenzen 310, 312 angegeben, die für eine gegebene Kalibrierung des Systems unverändert bleiben. Aufgrund des FMCW-Prinzips oder Stepped- Frequenz- Prinzips ändert sich die Phase kontinuierlich oder sprunghaft während einer Messung. Wenn diese zum Beispiel vom Punkt 302 ausgehende Phasenänderung größer als 45° ist, so dass die Symbolunterscheidungsgrenze 310 überschritten wird, wird das Demodulationsverfahren typischerweise einen falschen Bit-Wert ermitteln. So entspricht zum Beispiel der Punkt 302 der Bit-Sequenz 00, Punkt 304 der Bit-Sequenz 01, Punkt 306 der Bit-Sequenz 10 und der Punkt 308 der Bitsequenz 11.

Die beiden Symbolunterscheidungsgrenzen 310, 312 stellen somit vier Quadranten dar mit jeweils einem Symbolunterscheidungsintervall von 90° dar, innerhalb derer eine feste Zuordnung zu einem der vier Bit-Werte gegeben ist. Für eine zuverlässige Demodulation muss daher gewährleistet sein, dass die Phasendrehung innerhalb der durch die Symbolunterscheidungsgrenzen vorgegebenen Bereichen bleibt. Ansonsten kommt es zu einer sprunghaften Erhöhung der Fehlerrate der Demodulation.

## Patentansprüche

1. Abstandsmesssystem (150) zur Bestimmung eines Abstandsbereichs (156) zwischen einem ersten und einem zweiten Systemmodul (152, 154) mit
- Sende- und Empfangsmitteln (164) zum Übermitteln von Abfragesignalen und Funkantwortsignalen zwischen dem ersten und dem zweiten Systemmodul,
- einer Modulationseinheit zur Erzeugung der Funkantwortsignale mittels Modulation empfangener Abfragesignale mit einer Datensequenz,
- einer Auswerteeinheit (168) zur Demodulation empfangener Funkantwortsignale zur Wiedergewinnung der Datensequenz und zur Bestimmung einer Fehlerrate der Wiedergewinnung, wobei der Abstandsbereich durch einen Schwellwert (208) der Fehlerrate (202) bestimmt wird.

2. Abstandsmesssystem nach Anspruch 1, mit einem frequenzmodulierten Dauerstrich Radarsystem zur Erzeugung und Auswertung der Abfragesignale und Funkantwortsignale.

3. Abstandsmesssystem nach Anspruch 1, mit einem Stepped-Frequenz Radarsystem zur Erzeugung und Auswertung der Abfragesignale und Funkantwortsignale.

4. Abstandsmesssystem nach einem der Ansprüche 1 bis 3, wobei der Schwellwert (208) der Fehlerrate (202) der Wiedergewinnung der Datensequenz durch eine Phasenverschiebung zwischen dem gesendeten Abfragesignal und dem empfangenen Funkantwortsignal bestimmt ist.

5. Abstandsmesssystem nach Anspruch 4, wobei die Phasenverschiebung durch den Abstand zwischen dem ersten und dem zweiten Systemmodul (152, 154) und durch den Frequenzhub des Radarsystems bestimmt ist.

6. Abstandsmesssystem nach einem der Ansprüche 1 bis 5, wobei die Modulation durch eine Binary Phase Shift Keying (BPSK), eine Quadrature Phase Shift Keying (QPSK), eine 8-PSK, eine 16-PSK oder durch eine M-Way Phase Shift Keying (MPSK) Modulation ausgebildet ist.

7. Abstandsmesssystem nach einem der Ansprüche 1 bis 6, wobei die Modulation und eine Entscheidungsgrenze (310, 312) der Phasenverschiebung durch einen Benutzer bestimmbar sind.

8. Abstandmesssystem (150) nach einem der Ansprüche 1 bis 7, wobei das erste Systemmodul als stationärer Transponder (108, 110, 112) und das zweite Systemmodul als mobiles Radargerät (114) zum Senden von Abfragesignalen und zum Empfangen von Funkantwortsignalen, die vom Transponder in Antwort auf empfangene Abfragesignale erzeugbar sind, ausgebildet ist.

9. Radarsystem zur Bestimmung eines Abstandsbereichs zwischen einem Radargerät (114) und einem Transponder (108, 110, 112) mit
- Sende- und Empfangsmitteln (164) zum Übermitteln von Abfragesignalen und Funkantwortsignalen zwischen dem Radargerät und dem Transponder,
- einer Modulationseinheit zur Erzeugung der Funkantwortsignale mittels Modulation empfangener Abfragesignale mit einer Datensequenz,
- einer Auswerteeinheit (168) zur Demodulation empfangener Funkantwortsignale zur Wiedergewinnung der Datensequenz und zur Bestimmung einer Fehlerrate (202) der Wiedergewinnung, wobei der Abstandsbereich (156) durch einen Schwellwert (208) der Fehlerrate bestimmt wird.

10. Mobiles Bedien- und Beobachtungsgerät (106) für die Automatisierungskomponenten (102) einer technischen Anlage (104) mit einem Lokalisierungsmodul (114) zur Abstandsabgrenzung zwischen dem mobilen Bedien- und Beobachtungsgerät und der technischen Anlage, wobei das Lokalisierungsmodul mit
- Sende- und Empfangsmitteln (164) zum Übermitteln von Abfragesignalen und Funkantwortsignalen zwischen dem Lokalisierungsmodul und einem Transponder, der zur Erzeugung der Funkantwortsignale mittels Modulation empfangener Abfragesignale mit einer Datensequenz ausgebildet ist,
- einer Auswerteeinheit (168) zur Demodulation empfangener Funkantwortsignale zur Wiedergewinnung der Datensequenz und zur Bestimmung einer Fehlerrate der Wiedergewinnung ausgestattet ist, wobei ein Abstandsabgrenzungsbereich durch einen Schwellwert der Fehlerrate bestimmt wird.

11. HMI System mit zumindest einem mobilen Bedien- und Beobachtungsgerät (106) für die Automatisierungskomponenten (102) einer technischen Anlage (104) und mit einem Radarsystem zur Abstandsabgrenzung des mobilen Bedien- und Beobachtungsgeräts, wobei das Radarsystem mit
- Sende- und Empfangsmitteln (164) zum Übermitteln von Abfragesignalen und Funkantwortsignalen zwischen einem Radargerät und einem Transponder, wobei der Transponder zur Erzeugung der Funkantwortsignale mittels Modulation empfangener Abfragesignale mit einer Datensequenz ausgebildet ist,
- einer Auswerteeinheit (168) zur Demodulation empfangener Funkantwortsignale zur Wiedergewinnung der Datensequenz und zur Bestimmung einer Fehlerrate (202) der Wiedergewinnung ausgestattet ist, wobei ein Abstandsabgrenzungsbereich durch einen Schwellwert (208) der Fehlerrate bestimmt wird.

12. Verfahren zur Abstandsmessung mittels Bestimmung eines Abstandsbereichs (156) zwischen einem ersten und einem zweiten Systemmodul (152, 154) mit folgenden Schritten
- übermitteln von Abfragesignalen und Funkantwortsignalen zwischen dem ersten und dem zweiten Systemmodul,
- erzeugen von Funkantwortsignalen mittels Modulation empfangener Abfragesignale mit einer Datensequenz,
- demodulieren empfangener Funkantwortsignale zur Wiedergewinnung der Datensequenz und zur Bestimmung einer Fehlerrate (202) der Wiedergewinnung, wobei der Abstandsbereich durch einen Schwellwert (208) der Fehlerrate bestimmt wird.

## Claims

1. Distance measuring system (150) for determining a distance range (156) between a first and a second system module (152, 154) comprising
- transmitting and receiving means (164) for conveying enquiry signals and radio response signals between the first and the second system module,
- a modulation unit for generating radio response signals by means of the modulation of received enquiry signals with a data sequence, and
- an evaluating unit (168) for demodulating received radio response signals for recovering the data sequence and for determining an error rate of the recovery, the distance range being determined by a threshold value (208) of the error rate (202).

2. Distance measuring system according to Claim 1, comprising a frequency-modulated continuous-wave radar system for generating and responding to the enquiry signals and radio response signals.

3. Distance measuring system according to Claim 1, comprising a stepped-frequency radar system for generating and evaluating the enquiry signals and radio response signals.

4. Distance measuring system according to one of Claims 1 to 3, wherein the threshold value (208) of the error rate (202) of the recovery of the data sequence is determined by a phase shift between the transmitted enquiry signal and the received radio response signal.

5. Distance measuring system according to Claim 4, wherein the phase shift is determined by the distance between the first and the second system module (152, 154) and by the frequency deviation of the radar system.

6. Distance measuring system according to one of Claims 1 to 5, wherein the modulation is formed by a binary phase shift keying (BPSK), quadrature phase shift keying (QPSK), 8-PSK, 16-PSK or an M-way phase shift keying (MPSK) modulation.

7. Distance measuring system according to one of Claims 1 to 6, wherein the modulation and a decision boundary (310, 312) of the phase shift can be determined by a user.

8. Distance measuring system (150) according to one of Claims 1 to 7, wherein the first system module is constructed as a stationary transponder (108, 110, 112) and the second system module is constructed as mobile radar device (114) for transmitting enquiry signals and for receiving radio response signals which can be generated by the transponder as a response to received enquiry signals.

9. Radar system for determining a distance range between a radar device (114) and a transponder (108, 110, 112) comprising
- transmitting and receiving means (164) for conveying enquiry signals and radio response signals between the radar device and the transponder,
- a modulation unit for generating the radio response signals by means of modulation of received enquiry signals with a data sequence,
- an evaluating unit (168) for demodulating received radio response signals for recovering the data sequence and for determining an error rate (202) of the recovery, wherein the distance range (156) is determined by a threshold value (208) of the error rate.

10. Mobile operating and observing device (106) for the automation components (102) of a technical installation (104) comprising a locating module (114) for delimiting the distance between the mobile operating and observing device and the technical installation, wherein the locating module is equipped with
- transmitting and receiving means (164) for conveying enquiry signals and radio response signals between the locating module and a transponder which is constructed for generating the radio response signals by means of modulation of received enquiry signals with a data sequence,
- an evaluating unit (168) for demodulating received radio response signals for recovering the data sequence and for determining an error rate of the recovery, wherein a distance delimiting range is determined by a threshold value of the error rate.

11. HMI system comprising at least one mobile operating and observing device (106) for the automation components (102) of a technical installation (104) and comprising a radar system for delimiting the distance of the mobile operating and observing device, wherein the radar system is equipped with
- transmitting and receiving means (164) for conveying enquiry signals and radio response signals between a radar device and a transponder, wherein the transponder is constructed for generating the radio response signals by means of modulation of received enquiry signals with a data sequence,
- an evaluating unit (168) for demodulating received response signals for the recovery of the data sequence and for determining an error rate (202) of the recovery, wherein a distance delimiting range is determined by a threshold value (208) of the error rate.

12. Method for measuring distance by means of determination of a distance range (156) between a first and a second system module (152, 154), comprising the following steps:
- conveying enquiry signals and radio response signals between the first and the second system module,
- generating radio response signals by means of modulation of received enquiry signals with a data sequence,
- demodulating received radio response signals for the recovery of the data sequence and for determining an error rate (202) of the recovery, wherein the distance range is determined by a threshold value (208) of the error rate.

## Revendications

1. Système (150) de mesure de distance pour la détermination d'un domaine (156) de distance entre un premier et un deuxième modules 152, 154) de système, comprenant
- des moyens d'émission et de réception pour la transmission de signaux d'interrogation et de signaux de réponse radio entre le premier et le deuxième modules de système,
- une unité de modulation pour la production des signaux de réponse radio au moyen d'une modulation de signaux d'interrogation reçus par une séquence de données,
- une unité ( 168 ) d'exploitation pour la démodulation de signaux de réponse radio reçus pour la récupération de la séquence de données et pour la détermination d'un taux d'erreurs de la récupération, le domaine de distance étant déterminé par une valeur ( 208 ) de seuil du taux ( 202 ) d'erreurs.

2. Système de mesure de distance suivant la revendication 1, comprenant un système radar à ondes entretenues, modulé en fréquence, pour la production et l'exploitation des signaux d'interrogation et des signaux de réponse radio.

3. Système de mesure de distance suivant la revendication 1, comprenant un système radar à fréquence échelonnée pour la production et l'exploitation des signaux d'interrogation et des signaux de réponse radio.

4. Système de mesure de distance suivant l'une des revendications 1 à 3, dans lequel la valeur ( 208 ) de seuil du taux ( 202 ) d'erreurs de la récupération de la séquence de données est déterminée par un déphasage entre le signal d'interrogation envoyé et le signal de réponse radio reçu.

5. Système de mesure de distance suivant la revendication 4, dans lequel le déphasage est déterminé par la distance entre le premier et le deuxième modules ( 152, 154 ) de système et par l'excursion de fréquence du système radar.

6. Système de mesure de distance suivant l'une des revendications 1 à 5, dans lequel la modulation est constituée par une modulation Binary Phase Shift Keying ( PBSK ) par une modulation Quadrature Phase Shitf Keying (QPSK) par une modulation 8-PSK, par une modulation 16-PSK ou par une modulation M-Way Phase Shift Keying ( MPSK ).

7. Système de mesure de distance suivant l'une des revendications 1 à 5, dans lequel la modulation et une limite ( 310, 312 ) de décision du déphasage peuvent être déterminées par un utilisateur.

8. Système ( 150 ) de mesure de distance suivant l'une des revendications 1 à 7, dans lequel le premier module de système est constitué sous la forme d'un transpondeur (108, 110, 112 ) fixe et le deuxième module de système sous la forme d'un appareil ( 114 ) radar mobile pour l'envoi de signaux d'interrogation et pour la réception de signaux de réponse radio, qui peuvent être produits par le transpondeur en réponse à des signaux d'interrogation reçus.

9. Système radar pour la détermination d'un domaine de distance entre un appareil ( 114 ) radar et un transpondeur ( 108, 110, 112 ), comprenant
- des moyens (164) d'émission et de réception pour la transmission de signaux d'interrogation et de signaux de réponse radio entre l'appareil radar et le transpondeur,
- une unité de modulation pour la production des signaux de réponse radio au moyen d'une modulation de signaux d'interrogation reçus par une séquence de données,
- une unité ( 168 ) d'exploitation pour la démodulation de signaux de réponse radio reçus pour la récupération de la séquence de données et pour la détermination d'un taux d'erreurs de la récupération, le domaine de distance étant déterminé par une valeur (208) de seuil du taux d'erreurs.

10. Appareil ( 106 ) mobile de service et d'observation pour les composants ( 102 ) d'automatisation d'une installation ( 104 ) technique ayant un module ( 114 ) de localisation pour la limitation de la distance entre l'appareil mobile de service et d'observation et l'installation technique, dans lequel le module de localisation comprend
- des moyens (164) d'émission et de réception pour la transmission de signaux d'interrogation et de signaux de réponse radio entre le module de localisation et un transpondeur, qui est constitué pour la production des signaux de réponse radio au moyen d'une modulation de signaux d'interrogation reçus par une séquence de données,
- une unité ( 168 ) d'exploitation, qui est équipée pour la démodulation de signaux de réponse radio reçus pour la récupération de la séquence de données et pour la détermination d'un taux d'erreurs de la récupération, un domaine de limitation de distance étant déterminé par une valeur de seuil du taux d'erreurs.

11. Système HMI ayant au moins un appareil ( 106 ) mobile de service et d'observation, pour les composants ( 102 ) d'automatisation d'une installation ( 104 ) technique, et ayant un système radar, pour la limitation de distance de l'appareil mobile de service et d'observation, dans lequel le système radar comprend
- des moyens (164) d'émission et de réception pour la transmission de signaux d'interrogation et de signaux de réponse radio entre un appareil radar et un transpondeur, le transpondeur étant constitué pour la production de signaux de réponse radio au moyen d'une modulation de signaux d'interrogation reçus par une séquence de données,
- une unité ( 168 ) d'exploitation pour la démodulation de signaux de réponse radio reçus pour la récupération de la séquence de données et pour la détermination d'un taux d'erreurs de la récupération, le domaine de distance étant déterminé par une valeur ( 208 ) de seuil du taux d'erreurs.

12. Procédé de mesure de distance au moyen d'une détermination d'un domaine ( 156 ) de distance entre un premier et un deuxième modules ( 152, 154 ) de système, comprenant les stades, dans lesquels
- on transmet des signaux d'interrogation et des signaux de réponse radio entre le premier et le deuxième modules de système,
- on produit des signaux de réponse radio au moyen d'une modulation de signaux d'interrogation reçus par une séquence de données,
- on démodule des signaux de réponse radio reçus pour la récupération de la séquence de données et pour la détermination d'un taux ( 202 ) d'erreurs de la récupération, le domaine de distance étant déterminé par une valeur ( 208 ) de seuil du taux d'erreurs.
